# FASCICULE DE BREVET EUROPEEN

(11) **EP 1 914 437 B1**
(45) Date de publication et mention de la délivrance du brevet: **07.10.2009**
(21) Numéro de dépôt: 07118131.7
(22) Date de dépôt: 09.10.2007
(51) Int. Cl.: F16D 65/092

(54) **Frein à disque de véhicule automobile comportant des moyens de rappel élastique d'une plaque de découplage dans une position centrale de repos.**
Scheibenbremse mit rückstellendem Dämpfungsblech
Disc brake having a self centering shim

(30) Priorité: 17.10.2006 FR 0609195
(43) Date de publication de la demande: 23.04.2008
(73) Titulaire: Robert Bosch GmbH, 70442 Stuttgart (DE)
(72) Inventeur: Champion, Pascal, 49240 Avrille-France (FR); Prades, Xavier, 49125 Tierce-France (FR); Plessis, David, 49140 Soucelles-France (FR); Vinck, Jan, 49250 Beaufort en Vallée (FR); Audinay, Daniel, 49800 Trelaze (FR); Bonnec, Jean-Louis, 49130 Les Ponts de Cé (FR)
(74) Mandataire: Hurwic, Aleksander Wiktor

(56) Documents cités:
- EP-A- 1 571 364
- EP-A- 1 591 687
- EP-A1- 0 628 743
- JP-A- 58 211 032

## Description

L'invention concerne un frein à disque de véhicule automobile.

L'invention concerne plus particulièrement un frein à disque de véhicule automobile, qui comporte un disque d'axe déterminé contre chacune des faces opposées duquel un étrier de frein est susceptible de serrer un patin de frein, du type dans lequel un support du patin de frein est sollicité par un élément de serrage de l'étrier pour serrer une face de friction dudit patin contre le disque lors d'un freinage, et du type dans lequel le support du patin est monté à ses extrémités transversales coulissant avec jeu dans des glissières associées d'une chape de l'étrier.

On connaît de nombreux exemples de frein à disque de ce type.

Conventionnellement, le support de patin comporte un revêtement insonorisant qui est destiné à isoler thermiquement le piston du patin de frein pour éviter que les calories produites par le serrage du patin contre le disque lors du freinage ne soient transmises au piston de l'étrier, et, par son intermédiaire, au liquide de freinage. Ce revêtement présente aussi des caractéristiques d'isolation phonique.

Il est connu de proposer de nouveaux types d'étrier de frein, du type de celui décrit précédemment, dans lesquels le patin est monté coulissant dans la glissière avec interposition de ressorts à lames. Ces étriers sont sensés être plus silencieux que les étriers conventionnels. En effet, les ressorts à lames sont destinés à réduire les vibrations qui existent entre le patin de frein et l'étrier en permettant une certaine liberté de mouvement du patin de frein dans l'étrier.

Cependant, on a constaté qu'à l'usage, le piston a tendance à pénétrer le revêtement d'isolation du support de patin de frein et devient de ce fait solidaire du revêtement, et donc du patin de frein, ce qui empêche alors le patin d'avoir la liberté de mouvement désirée.

Pour résoudre ce problème, il est connu d'interposer une plaque de découplage entre le piston et le support de patin. Le revêtement isolant et insonorisant est alors porté par cette plaque. Lors des freinages, le piston s'enfonce dans la plaque de découplage mais le patin est libre de glisser transversalement par rapport à la plaque de découplage. **Le document** EP 0 628 743 **fait état de telles plaques.**

Un problème se pose toutefois lorsque la plaque de découplage est dans une position excentrée par rapport au support de patin avant qu'un freinage n'ait lieu. Dans cette position, la course de coulissement de la plaque de découplage par rapport au support de patin est limité voire nulle dans le sens de déplacement du patin. La plaque ne peut donc plus remplir sa fonction de découplage.

Pour résoudre ce problème, l'invention propose un frein à disque du type décrit précédemment, caractérisé en ce qu'il comporte des moyens de rappel élastique de la plaque de découplage vers une position centrale de repos par rapport au support de patin, la plaque de découplage est fixée de manière coulissante au support de patin par l'intermédiaire des moyens de rappel élastique.

Selon d'autres caractéristiques de l'invention :
- les moyens de rappel élastique sont fixés au support de patin ;
- le frein comporte des moyens pour guider le déplacement de la plaque de découplage par rapport au support de patin lors de son coulissement ;
- les moyens de rappel élastique exercent une force de rappel sur la plaque de découplage qui est orientée selon la direction de déplacement de la plaque de découplage par rapport au support de patin ;
- les moyens de rappel élastique comportent au moins deux ressorts dont chacun exerce une force de rappel de sens opposé à celle de l'autre ressort ;
- les ressorts sont réalisés venus de matière avec la plaque de découplage ;
- le support de patin comporte au moins un plot qui est reçu dans une glissière associée de la plaque de découplage pour guider le déplacement de la plaque de découplage par rapport au support de patin lors de son coulissement ;
- la glissière est formée par un trou oblong réalisé dans la plaque de découplage ;
- le plot est un élément rapporté sur le support de patin ;
- le plot est réalisé venu de matière avec le support de patin ;
- le support de patin comporte deux plots qui sont reçus dans deux glissières parallèles ;
- l'axe de la glissière est d'orientation transversale horizontale ;
- l'axe de la glissière est d'orientation transversale verticale ;
- l'axe de la glissière est d'orientation transversale oblique ;
- l'axe de la glissière est rectiligne ;
- l'axe de la glissière comporte au moins une partie curviligne.

D'autres caractéristiques et avantages apparaîtront au cours de la lecture de la description détaillée qui va suivre pour la compréhension de laquelle on se reportera aux dessins annexés parmi lesquels :
- la figure 1 est une vue en perspective éclatée qui représente une partie du frein à disque réalisé selon les enseignements de l'invention ;
- la figure 2 est une vue en perspective qui représente un support de patin comportant d'une plaque de découplage selon l'invention ;
- la figure 3 est une vue de détail qui représente une variante d'un trou de guidage de la plaque de découplage selon l'invention ;
- la figure 4 est une vue de derrière qui représente le frein à disque de la figure 1 en position de repos ;
- la figure 5 est une vue similaire à celle de la figure 3 qui représente le frein à disque en position de freinage.

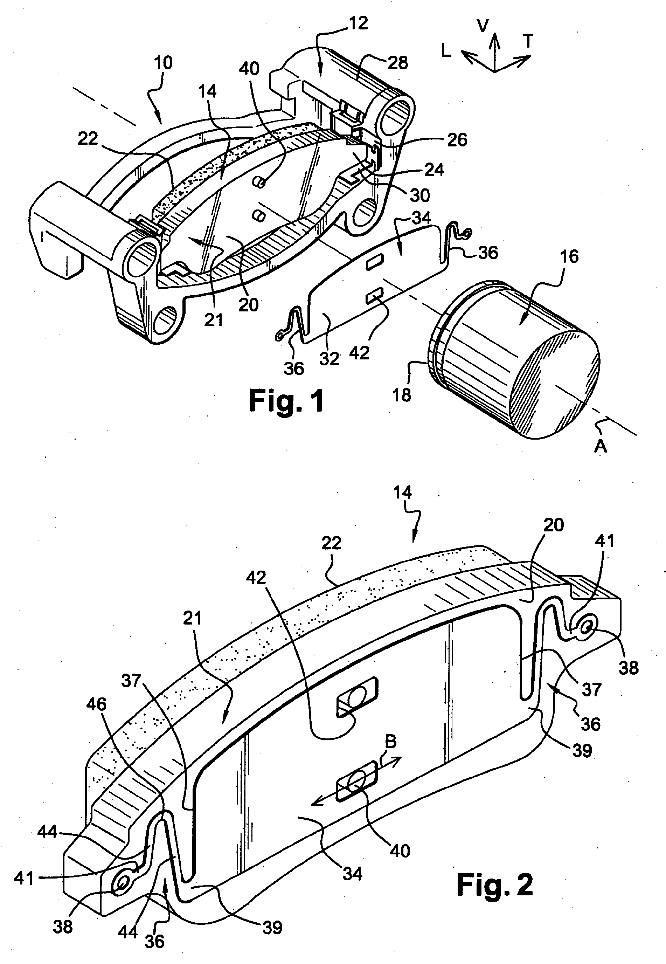

Pour la suite de la description, on adoptera à titre non limitatif des orientations longitudinale, verticale et transversale indiquées par le trièdre "L,V,T" de la figure 1.

Dans la description qui va suivre, des numéros de référence identiques désignent des pièces identiques ou ayant des fonctions similaires.

On a représenté à la figure 1 une partie d'un frein 10 à disque de véhicule automobile selon l'invention.

De manière connue, un frein 10 à disque comporte un disque (non représenté) contre chacune des faces opposées duquel un étrier 12 de frein est susceptible de serrer un patin 14 de frein. De manière connue, le frein 10 comporte au moins un piston axial 16 d'axe longitudinal "A" dont une extrémité avant 18 d'appui est susceptible de solliciter une face d'appui arrière 20 d'un support de patin 21 pour serrer une face de friction 22 opposée du patin 14 contre le disque lors d'un freinage.

De manière connue, chacune des extrémités transversales 24 opposées du support de patin 21 est montée coulissante avec jeu dans une glissière 26 associée d'une chape 28 de l'étrier 12 par l'intermédiaire d'un ressort 30 à lame interposé entre ladite extrémité transversale 24 et ladite glissière 26 associée. Ce ressort à lame 30 permet d'autoriser un degré déterminé de mouvement du patin 14 dans la chape 28, généralement mais de manière non limitative, un mouvement de coulissement transversal.

De manière connue, le frein à disque 10 est muni d'un moyen permettant de découpler le patin 14 du piston 16.

A cet effet, le frein à disque 10 comporte une plaque de découplage 34 qui s'étend dans un plan transversal par rapport à l'axe "A" du piston 16 et qui est interposée axialement entre l'extrémité de sollicitation 18 du piston 16 et la face d'appui 20 du support de patin 21.

La face arrière 32 de la plaque de découplage 34 comporte un revêtement insonorisant qui est destiné à isoler thermiquement le piston 16 du patin 14 de frein pour éviter que les calories produites par le serrage du patin 14 contre le disque lors du freinage ne soient transmises au piston 16 et, par son intermédiaire, au liquide de freinage.

Or, on a constaté qu'à l'usage, le piston 16 à tendance à pénétrer le revêtement 32 d'isolation de la face arrière du support de patin 21 et devient de ce fait solidaire dudit revêtement 32, et donc de la plaque de découplage 34. La plaque de découplage 34 est donc susceptible d'être déplacée vers une position excentrée de butée dans laquelle elle ne peut plus coulisser que dans un sens par rapport au support de patin 21. Si la plaque reste dans cette position excentrée entre deux freinage, le patin 14 ne peut alors plus avoir la liberté de mouvement désirée.

Selon une variante non représentée de l'invention, le patin 14 peut aussi être sollicité par une aile verticale de l'étrier. Des problèmes similaires sont alors susceptibles de se poser. L'invention est apte à résoudre aussi ces problèmes.

Pour remédier à cet inconvénient, l'invention propose une plaque de découplage 34 munie de moyen de rappel vers une position centrale de repos par rapport à la face d'appui 20 du support de patin 21.

Comme représenté plus en détail à la figure 2, la plaque de découplage 34 est montée coulissante sur la face d'appui 20 du support de patin 21. La plaque de découplage 34 comporte des moyens de rappel élastique vers une position centrale de repos par rapport à la face d'appui 20 du support de patin 21. La plaque de découplage 34 est fixée de manière coulissante au support de patin 21 par l'intermédiaire de ces moyens de rappel élastique.

La plaque de découplage 34 comporte plus particulièrement deux ressorts 36 qui sont agencés au deux bords d'extrémité transversale 37 de la plaque 34. Les ressorts 36 sont aptes à exercer une force de rappel selon une direction transversale.

Avantageusement les ressorts 36 sont réalisés venus de matière avec la plaque de découplage 34. Ainsi, chaque ressort 36 est constitué d'une languette de forme sinusoïdale d'axe transversal qui comporte une première extrémité 39 qui est fixée au bas du bord d'extrémité transversale 37 de la plaque de découplage 34 et une deuxième extrémité libre 41 qui est agencée transversalement à distance du bord d'extrémité transversale 37 de la plaque de découplage 34.

La languette 36 comporte ici deux tronçons rectilignes 44 sensiblement verticaux qui sont parallèles au bord d'extrémité de la plaque de découplage 34. Les tronçons rectilignes 44 sont joints par un tronçon incurvé 46. Les tronçons incurvés sont déformables élastiquement en flexion dans un plan transversal vertical de manière que la languette 36 puisse être étendue ou rétractée transversalement à la manière d'un soufflet.

La plaque de découplage 34 est fixée à la face d'appui 20 du support de patin 21 par l'intermédiaire des ressorts 36. Ainsi l'extrémité libre 41 de chaque ressort est fixée à la face d'appui 20 par exemple au moyen de rivets 38 au niveau de chaque extrémité transversale 24 du support de patin 21.

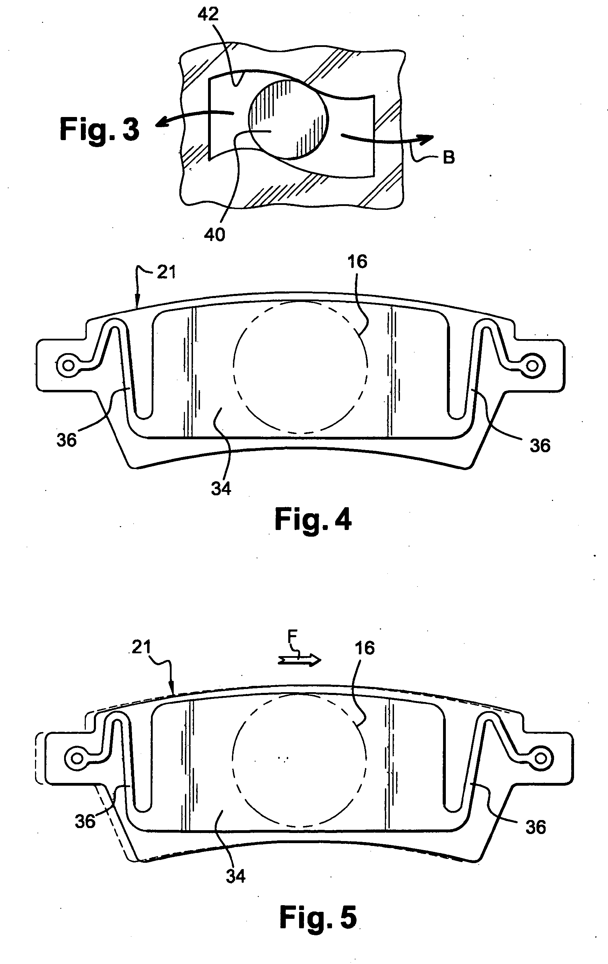

La plaque de découplage 34 est ainsi rappelée par les ressorts 36 vers une position centrale de repos dans laquelle les ressorts 36 exercent sur la plaque de découplage 34 deux forces transversales de rappel de sens opposés et de mêmes intensités, comme représenté à la figure 4.

Le frein à disque 10 comporte aussi des moyens pour guider le coulissement transversal de la plaque de découplage 34 par rapport à la face d'appui 20 du patin 14 de manière que la force de rappel élastique exercée par les ressorts 36 soit orientée selon la direction de coulissement de la plaque de découplage 34.

A cet effet, la face d'appui 20 du support de patin 21 comporte deux plots 40 cylindriques qui s'étendent axialement vers l'arrière. Les plots 40 peuvent être réalisés venus de matière avec la face d'appui 20 du support de patin 21 ou être rapportés sur la face d'appui 20.

La plaque de découplage 34 comporte deux trous oblongs 42, qui sont ici débouchants et qui sont destinés à recevoir les plots 40 du patin 14. Chaque trou oblong 42 est allongé selon un axes principal qui est ici un axe rectiligne transversal "B" Les axes principaux "B" des deux trous oblongs 42 sont parallèles entre eux. La largeur verticale des trous oblongs 42 correspond au diamètre des plots 40, ainsi chaque plot 40 est reçu avec un jeu transversal dans le trou oblong 42 associé.

Les plots 40 ont une longueur axiale telle qu'ils ne font pas saillie par rapport à la face arrière de la plaque de découplage 34 de manière que le piston 16 n'entre pas en contact avec les plots 40 lorsqu'il vient solliciter le patin de frein 14.

Dans la position centrale de repos de la plaque de découplage 34, les plots 40 sont agencés transversalement au milieu du trou oblong associé 42 de manière que la plaque de découplage 34 puisse coulisser transversalement dans les deux sens par rapport au patin 14 vers une position extrême de butée dans laquelle le plot 40 est en butée contre un bord d'extrémité transversale du trou oblong 42 associé.

Selon une variante non représentée de l'invention, le trou oblong 42 est allongé selon un axe principal "B" rectiligne vertical. Dans ce cas, les ressorts 36 sont conformés de manière exercer sur la plaque 34 une force vertical de rappel vers sa position centrale de repos.

Selon une autre variante non représentée de l'invention, le trou oblong 42 est allongé selon un axe principal "B" rectiligne oblique. Dans ce cas, les ressorts 36 sont conformés de manière exercer sur la plaque 34 une force oblique de rappel vers sa position centrale de repos.

Selon encore une autre variante de l'invention qui est représentée à la figure 3, le trou oblong 42 est allongé selon un axe principal "B" qui comporte au moins une partie curviligne.

Dans toutes ces variantes, les axes principaux "B" des trous oblongs 42 sont parallèles entre eux.

Selon une variante non représentée de l'invention, les plots 40 sont portés par une face avant de la plaque de découplage 34, et les glissières de guidage en coulissement 42 sont formées par des rainures oblongues qui sont réalisées dans la face d'appui 20 du support de patin 21.

Lors du fonctionnement d'un tel frein à disque, comme représenté à la figure 4, l'extrémité 18 du piston 16 vient solliciter la face d'appui 20 du support de patin 21 par l'intermédiaire de la plaque de découplage 34. La plaque de découplage 34 occupe alors sa position centrale de repos et les forces de rappel exercées par les ressorts 36 ont une même intensité.

Lorsque la face de friction 22 du patin 14 entre en contact avec le disque tournant, elle adhère au disque. Le patin 14 est alors entraîné dans une direction transversale par rapport à la chape 28 et par rapport au piston 16 comme représentée par la flèche "F" orientée vers la droite à la figure 5.

Simultanément, le piston 16 s'est enfoncé dans la face arrière 32 de la plaque de découplage 34 à laquelle il adhère. La plaque de découplage 34 est donc immobile par rapport au piston 16 tandis que la face d'appui 20 du support de patin 21 glisse en coulissement dans un plan transversal vers la droite selon la figure 5.

Le coulissement de la plaque de découplage 34 est guidé et limité par les plots 40 qui coopèrent avec les trous oblongs associés 42. Les plots 40 sont alors susceptibles d'être en butée contre un bord d'extrémité transversale du trou oblong 42 associé.

Les ressorts 36 exercent alors des forces de rappel d'intensité différentes qui tendent à rappeler la plaque de découplage 34 vers sa position centrale de repos.

Lorsque le piston 16 relâche la pression qu'il exerce sur le patin 14, le patin 14 est rappelé vers sa position initiale par des moyens de rappel connus non représentés. Les ressorts 36 exercent alors une force de rappel transversal sur la plaque de découplage 34 qui est rappelée vers sa position centrale de repos.

Le patin 14 est alors prêt à être de nouveau sollicité par le piston 16, la plaque de découplage 34 pouvant à nouveau coulisser par rapport au patin dans une direction transversale.

## Revendications

1. Frein à disque (10) de véhicule automobile, qui comporte un disque d'axe déterminé contre chacune des faces opposées duquel un étrier (12) de frein est susceptible de serrer un patin de frein (14),
du type dans lequel un support (21) du patin de frein est sollicité par un élément de serrage (16) de l'étrier (12) pour serrer une face de friction (22) dudit patin (14) contre le disque lors d'un freinage,
du type dans lequel le support de patin (21) est monté à ses extrémités transversales (24) coulissant avec jeu dans des glissières (26) associées d'une chape (28) de l'étrier (12),
du type dans lequel une plaque de découplage (34) est interposée axialement entre le support du patin (21) et l'élément de serrage (16), la plaque de découplage (34) étant montée coulissante dans un plan transversal par rapport au support de patin (21) pour permettre un déplacement du patin de frein (14) par rapport à l'élément de serrage (16) lors du freinage afin de limiter les bruits de freinage,
et du type dans lequel des moyens (40, 42) pour guider le déplacement de la plaque de découplage (34) par rapport au support de patin (21) lors de son coulissement
**caractérisé en ce qu'**il comporte des moyens de rappel élastique (36) de la plaque de découplage (34) vers une position centrale de repos par rapport au support de patin (21),
et **en ce que** la plaque de découplage (34) est fixée de manière coulissante au support de patin (21) par l'intermédiaire des moyens de rappel élastique (36).

2. Frein (10) selon la revendication précédente, **caractérisé en ce que** les moyens de rappel élastique (36) sont fixés au support de patin (21).

3. Frein (10) selon la revendication 1, **caractérisé en ce que** les moyens de rappel élastique (36) exercent une force de rappel sur la plaque de découplage (34) qui est orientée selon la direction de déplacement de la plaque de découplage (34) par rapport au support de patin (21).

4. Frein (10) selon la revendication précédente, **caractérisé en ce que** les moyens de rappel élastique comportent au moins deux ressorts (36) dont chacun exerce une force de rappel de sens opposé à celle de l'autre ressort (36).

5. Frein (10) selon la revendication précédente, **caractérisé en ce que** les ressorts (36) sont réalisés venus de matière avec la plaque de découplage (34).

6. Frein (10) selon l'une quelconque des revendications précédentes, **caractérisé en ce que** le support de patin (21) comporte au moins un plot (40) qui est reçu dans une glissière associée (42) de la plaque de découplage (42) pour guider le déplacement de la plaque de découplage (34) par rapport au support de patin (21) lors de son coulissement.

7. Frein (10) selon la revendication précédente, **caractérisé en ce que** la glissière est formée par un trou oblong (42) réalisé dans la plaque de découplage (34).

8. Frein (10) selon l'une quelconque des revendications 6 ou 8, **caractérisé en ce que** le plot (40) est un élément rapporté sur le support de patin (21).

9. Frein (10) selon l'une quelconque des revendications 6 ou 7, **caractérisé en ce que** le plot (40) est réalisé venu de matière avec le support de patin (21).

10. Frein (10) selon l'une quelconque des revendications 6 à 9, **caractérisé en ce que** le support de patin (21) comporte deux plots (40) qui sont reçus dans deux glissières parallèles (42).

11. Frein (10) selon l'une quelconque des revendications 6 à 10, **caractérisé en ce que** l'axe (B) de la glissière (42) est d'orientation transversale horizontale.

12. Frein (10) selon l'une quelconque des revendications 6 à 10, **caractérisé en ce que** l'axe (B) de la glissière (42) est d'orientation transversale verticale.

13. Frein (10) selon l'une quelconque des revendications 6 à 10, **caractérisé en ce que** l'axe (B) de la glissière (42) est d'orientation transversale oblique.

14. Frein (10) selon l'une quelconque des revendications 11 à 13, **caractérisé en ce que** l'axe (B) de la glissière (42) est rectiligne.

15. Frein (10) selon l'une quelconque des revendications 11 à 13, **caractérisé en ce que** l'axe (B) de la glissière (42) comporte au moins une partie curviligne.

## Claims

1. Motor vehicle disc brake (10) which comprises a disc of determined axis against each of the opposite faces of which a brake caliper (12) is capable of pressing a brake pad (14),
of the type in which a brake pad backing plate (21) is urged by a brake-application element (16) of the caliper (12) to press a friction face (22) of the said pad (14) against the disc during braking,
of the type in which the pad backing plate (21) is mounted at its transverse ends (24) such that it can slide with clearance in slideways (26) associated with a yoke (28) of the caliper (12),
of the type in which a decoupling plate (34) is interposed axially between the pad backing plate (21) and the brake-application element (16), the decoupling plate (34) being slideably mounted in a transverse plane with respect to the pad backing plate (21) so as to allow the brake pad (14) to move with respect to the brake-application element (16) during braking so as to limit brake noise,
and of the type in which means (40, 42) for guiding the movement of the decoupling plate (34) with respect to the pad backing plate (21) as it slides,
**characterized in that** it comprises elastic return means (36) for elastically returning the decoupling plate (34) towards a central position of rest with respect to the pad backing plate (21),
and **in that** the decoupling plate (34) is slideably fixed to the pad backing plate (21) via the elastic return means (36).

2. Brake (10) according to the preceding claim, **characterized in that** the elastic return means (36) are fixed to the pad backing plate (21).

3. Brake (10) according to Claim 1, **characterized in that** the elastic return means (36) apply a return force to the decoupling plate (34) which is directed in the direction of travel of the decoupling plate (34) with respect to the pad backing plate (21).

4. Brake (10) according to the preceding claim, **characterized in that** the elastic return means comprise at least two springs (36) each of which applies a return force in the opposite direction to that of the other spring (36).

5. Brake (10) according to the preceding claim, **characterized in that** the springs (36) are formed as an integral part of the decoupling plate (34).

6. Brake (10) according to any one of the preceding claims, **characterized in that** the pad backing plate (21) comprises at least one stud (40) which is housed in an associated slideway (42) of the decoupling plate (34) so as to guide the movement of the decoupling plate (34) with respect to the pad backing plate (21) as it slides.

7. Brake (10) according to the preceding claim, **characterized in that** the slideway is formed of an oblong hole (42) made in the decoupling plate (34).

8. Brake (10) according to any one of Claims 6 or 7, **characterized in that** the stud (40) is an element added on to the pad backing plate (21).

9. Brake (10) according to either one of Claims 6 and 7, **characterized in that** the stud (40) is formed as an integral part of the pad backing plate (21).

10. Brake (10) according to any one of Claims 6 to 9, **characterized in that** the pad backing plate (21) comprises two studs (40) which are housed in two parallel slideways (42).

11. Brake (10) according to any one of Claims 6 to 10, **characterized in that** the axis (B) of the slideway (42) has a horizontal transverse orientation.

12. Brake (10) according to any one of Claims 6 to 10, **characterized in that** the axis (B) of the slideway (42) has a vertical transverse orientation.

13. Brake (10) according to any one of Claims 6 to 10, **characterized in that** the axis (B) of the slideway (42) has an oblique transverse orientation.

14. Brake (10) according to any one of Claims 11 to 13, **characterized in that** the axis (B) of the slideway (42) is straight.

15. Brake (10) according to any one of Claims 11 to 13, **characterized in that** the axis (B) of the slideway (42) has at least one curved portion.

## Patentansprüche

1. Scheibenbremse (10) für Kraftfahrzeug, die eine Scheibe mit bestimmter Achse aufweist, bei welcher ein Bremssattel (12) einen Bremsklotz gegen jede ihrer entgegengesetzten Seiten andrücken kann,
von dem Typ, bei welchem ein Träger (21) des Bremsklotzes von einem Andruckelement (16) des Bremssattels (12) beaufschlagt ist, um bei einem Bremsvorgang eine Reibfläche (22) des Klotzes (14) gegen die Scheibe zu drücken,
von dem Typ, bei welchem der Klotzträger (21) an seinen Querenden (24) mit Spiel in zugeordneten Führungen (26) einem Bügel (28) des Bremssattels (12) gleitend angebracht ist,
von dem Typ, bei welchem eine Entkopplungsplatte (34) axial zwischen dem Klotzträger (21) und dem Andruckelement (16) eingesetzt ist, wobei die Entkopplungsplatte (34) in einer zum Klotzträger (21) quer liegenden Ebene gleitend angebracht ist, um beim Bremsen eine Verlagerung des Bremsklotzes (14) bezüglich des Andruckelements (16) zu ermöglichen, um die Bremsgeräusche zu begrenzen,
und von dem Typ, bei welchen Mittel zum Führen (40, 42) der Verlagerung der Entkopplungsplatte (34) bezüglich des Klotzträgers (21) bei dessen Verlagerung vorgesehen sind,
**dadurch gekennzeichnet, dass** sie Mittel zum elastischen Rückstellen (36) der Entkopplungsplatte (34) zu einer zentralen Ruhestellung bezüglich des Klotzträgers (21) aufweist,
und dass die Entkopplungsplatte (34) am Klotzträger (21) über die Mittel zum elastischen Rückstellen (36) befestigt ist.

2. Bremse (10) nach dem vorhergehenden Anspruch, **dadurch gekennzeichnet, dass** die Mittel zum elastischen Rückstellen (36) am Klotzträger (21) befestigt sind.

3. Bremse (10) nach Anspruch 1, **dadurch gekennzeichnet, dass** die Mittel zum elastischen Rückstellen (36) eine Rückstellkraft auf die Entkopplungsplatte (34) ausüben, die gemäß der Verlagerungsrichtung der Entkopplungsplatte (34) bezüglich des Klotzträgers (21) ausgerichtet ist.

4. Bremse (10) nach dem vorhergehenden Anspruch, **dadurch gekennzeichnet, dass** die Mittel zum elastischen Rückstellen mindestens zwei Federn (36) aufweisen, die jeweils eine Rückstellkraft in der zur Rückstellkraft der anderen Feder (36) entgegengesetzten Richtung ausüben.

5. Bremse (10) nach dem vorhergehenden Anspruch, **dadurch gekennzeichnet, dass** die Federn (36) einstückig mit der Entkopplungsplatte (34) ausgebildet sind.

6. Bremse (10) nach einem der vorhergehenden Ansprüche, **dadurch gekennzeichnet, dass** der Klotzträger (21) mindestens einen Stift (40) aufweist, der in einer zugeordneten Führung (42) der Entkopplungsplatte (34) aufgenommen ist, um die Verlagerung der Entkopplungsplatte (34) bezüglich des Klotzträgers (21) bei dessen Gleiten zu führen.

7. Bremse (10) nach dem vorhergehenden Anspruch, **dadurch gekennzeichnet, dass** die Führung aus einem länglichen Langloch (42) gebildet ist, das in der Entkopplungsplatte (34) ausgebildet ist.

8. Bremse (10) nach einem der Ansprüche 6 oder 8, **dadurch gekennzeichnet, dass** der Stift (40) ein am Klotzträger (21) angesetztes Element ist.

9. Bremse (10) nach einem der Ansprüche 6 oder 7, **dadurch gekennzeichnet, dass** der Stift (40) mit dem Klotzträger (21) einstückig ausgebildet ist.

10. Bremse (10) nach einem der Ansprüche 6 bis 9, **dadurch gekennzeichnet, dass** der Klotzträger (21) zwei Stifte (40) aufweist, die in zwei parallelen Führungen (42) aufgenommen sind.

11. Bremse (10) nach einem der Ansprüche 6 bis 10, **dadurch gekennzeichnet, dass** die Achse (B) der Führung (42) quer horizontal ausgerichtet ist.

12. Bremse (10) nach einem der Ansprüche 6 bis 10, **dadurch gekennzeichnet, dass** die Achse (B) der Führung (42) quer vertikal ausgerichtet ist.

13. Bremse (10) nach einem der Ansprüche 6 bis 10, **dadurch gekennzeichnet, dass** die Achse (B) der Führung (42) quer schräg ausgerichtet ist.

14. Bremse (10) nach einem der Ansprüche 11 bis 13, **dadurch gekennzeichnet, dass** die Achse (B) der Führung (42) geradlinig ist.

15. Bremse (10) nach einem der Ansprüche 11 bis 13, **dadurch gekennzeichnet, dass** die Achse (B) der Führung (42) mindestens einen gekrümmten Teil aufweist.
